Europäisches Patentamt

European Patent Office

Office européen des brevets

(19)

(11) Veröffentlichungsnummer: **0 164 555**
**B1**

(12) ## EUROPÄISCHE PATENTSCHRIFT

(45) Veröffentlichungstag der Patentschrift:
22.03.89

(51) Int. Cl.⁴: **B 27 N 3/28**

(21) Anmeldenummer: 85105398.3

(22) Anmeldetag: 03.05.85

(54) Nach dem Strangpressverfahren aus Holzspänen und/oder Holzfasern unter Zusatz von Bindemitteln hergestellte Formkörper und Verfahren zu ihrer Herstellung.

(30) Priorität: 05.05.84 DE 3416662
05.10.84 DE 3436507
05.03.85 DE 3507634

(43) Veröffentlichungstag der Anmeldung:
18.12.85 Patentblatt 85/51

(45) Bekanntmachung des Hinweises auf die Patenterteilung:
22.03.89 Patentblatt 89/12

(84) Benannte Vertragsstaaten:
AT BE CH DE FR GB IT LI LU NL SE

(56) Entgegenhaltungen:
EP-B- 0 033 361

HOLZ ALS ROH- UND WERKSTOFF, 35. Jahrgang, 1977, SPRINGER-VERLAG, Berlin, Heidelberg, New York; H.-J. DEPPE "Technische Fortschritte bei der Isocyanatverleimung von Holzspanplatten" PROCEEDING OF THE FIFTEENTH WASHINGTON STATE UNIVERSITY INTERNATIONAL SYMPOSIUM ON PARTICLEBORD, 1981, PULLMAN, Washington; G.W. BALL "New Opportunities in Manufactoring Conventional Particleboard Using Isocyanite Binders" Seiten 265-285

(73) Patentinhaber: HOECHST AKTIENGESELLSCHAFT,
Postfach 80 03 20, D-6230 Frankfurt am Main 80 (DE)
Patentinhaber: SAUERLÄNDER SPANPLATTEN GmbH & Co. KG, D-5760 Arnsberg 2 (DE)

(72) Erfinder: Fuchs, Fritz Reichard, Dr.,
Richard-Wagner-Strasse 51, D-7410 Reutlingen (DE)
Erfinder: Staendeke, Horst, Dr., Alte Honrather Strasse 22, D-5204 Lohmar 21 (DE)

(74) Vertreter: von Grunelius, Sigmund, Dr., Hoechst AG,
Werk Knapsack Postfach 2902, D-5030 Hürth (DE)

**Beschreibung**

Die vorliegende Erfindung betrifft Formkörper, insbesondere Spannplatten in Form von Vollplatten oder Röhrenplatten, aus Holzspänen und/oder Holzfasern unter Zusatz eines Isocyanates als Bindemittel sowie ein Verfahren zu ihrer Herstellung.

Es ist bekannt, Isocyanate als Bindemittel bei der Herstellung von Holzspanplatten zu verwenden (vergleiche DE-A-1 653 177; DE-B-2 615 288; Aufsatz von DEPPE und ERNST in: «Holz als Roh- und Werkstoff» 29 (1971) 45–50). Wegen der Probleme, die durch das Kleben der Isocyanat-Reaktionsprodukte an metallischen Werkstoffen, beispielsweise an den Pressplatten oder Pressformen, entstehen, wird eine Verfahrensweise angegeben, die lediglich für die Mittelschicht der Dreischichtenplatte als Bindemittel Isocyanate, für die Deckschichten jedoch die Verwendung herkömmlicher Leime auf Basis Harnstoff/Formaldehyd, Melamin/Formaldehyd oder Phenol/Formaldehyd vorsieht. Auch die Verwendung von Trennmitteln auf Basis von Silicon- oder Paraffinverbindungen hat keine befriedigende Lösung des vorgenannten Problems gebracht. Ebenfalls nur negative Resultate wurden beim Einsatz von Heizplatten mit Polytetrafluorethylen-Auflage und bei der Verwendung von Trennfolien erhalten (vergleiche DEPPE und ERNST, loc. cit.).

Versuche zu einer Problemlösung auf chemischer Basis durch Besprühen der Oberflächen der Formlinge mit hydroxylgruppenhaltigen organischen Verbindungen führten ebenfalls zu keiner einfachen und generell praktikablen Arbeitsweise (vergleiche den Aufsatz von DEPPE in: «Holz als Roh- und Werkstoff» 35 (1977) 295–299).

Abgesehen davon, daß schon die oben aufgeführten Versuche zur Unterbindung des Klebens der Isocyanat-Reaktionsprodukte an den metallischen Oberflächen der Pressenwerkzeuge erfolglos waren, wäre auch bei positivem Ausgang eine Übertragung auf den anders gearteten Produktionsablauf des Strangpressverfahrens nicht möglich gewesen. Die Verfahrensunterschiede bei der Herstellung von Flachpressplatten einerseits und von Strangpressplatten wie Vollplatten oder Röhrenplatten andererseits sind insbesondere bei der Produktstromführung vor und beim Pressvorgang so gravierend, daß keiner der zur Problemlösung untersuchten Wege ohne erfinderisches Zutun übertragbar gewesen wäre.

Obwohl zu befürchten war, daß die oben geschilderten Probleme in verstärktem Maße beim Strangpressverfahren auftreten, wurde nunmehr in überraschender und nicht vorhersehbarer Weise gefunden, daß sich Isocyanate als wesentliche Komponente im Bindemittelsystem beim Strangpressverfahren einsetzen lassen, ohne daß dadurch eine Verstopfung der Strangpresse bewirkt wird. Erst dadurch wird es möglich, Formkörper nach dem Strangpressverfahren herzustellen, ohne auf formaldehydhaltige Bindemittel angewiesen zu sein. Gleichzeitig wird durch die Verwendung der Isocyanate die normalerweise schlechte Quellfestigkeit in Wasser wesentlich erhöht.

Gegenstand der vorliegenden Erfindung sind somit Formkörper, insbesondere Spanplatten in Form von Vollplatten oder Röhrenplatten, aus Holzspänen und/oder Holzfasern unter Zusatz eines Isocyanates als Bindemittel, die dadurch gekennzeichnet sind, daß die Formkörper 8 bis 15 Gewichts% Methyldiphenylisocyanat (MDI) als Bindemittel und 5 bis 50 Gewichts% eines mit einem wasserunlöslichen Kunstharz umhüllten Ammoniumpolyphosphates als Flammschutzmittel – jeweils bezogen auf die trockenen Holzspäne und/oder Holzfasern – enthalten.

Weiterhin betrifft die Erfindung ein Verfahren zur Herstellung von Formkörpern, bei welchem Holzspäne, Holzfasern oder deren Mischungen nach Zusatz eines Bindemittels in eine Strangpresse eingebracht werden, das dadurch gekennzeichnet ist, daß eine Vormischung aus den Holzspänen oder Holzfasern und einem Flammschutzmittel mit einer wäßrigen Emulsion eines Isocyanates als Bindemittel bedüst wird, wobei als Flammschutzmittel ein mit einem wasserunlöslichen Kunstharz umhülltes Ammoniumpolyphosphat in Mengen von 5 bis 50 Gewichts% und als Bindemittel Methyldiphenylisocyanat (MDI) in Mengen von 8 bis 15 Gewichts% – jeweils bezogen auf die trockenen Holzspäne und/oder Holzfasern – dienen und daß die in die Strangpresse eingebrachte Mischung aus Holzspänen und/oder Holzfasern mit Flammschutzmittel und Bindemittel einen Feuchtigkeitsgehalt von mindestens 6 Gewichts% aufweist.

Dabei kann der wäßrigen Emulsion des Bindemittels ein Hydrophobierungsmittel, vorzugsweise eine wäßrige Wachsemulsion, zugesetzt sein.

Die erfindungsgemäßen Formkörper, die insbesondere in Form von Vollplatten oder Röhrenspanplatten vorliegen, aber auch beispielsweise als Profile ausgebildet sein können, können damit die auch sonst üblichen Zusätze wie Hydrophobierungsmittel und dergleichen enthalten. Hierbei werden vorzugsweise solche Zusätze eingesetzt, die selbst frei von Formaldehyd oder formaldehydabgebenden Stoffen sind. Dies ist besonders dann von Vorteil, wenn die Oberfläche der Spanplatten beim späteren Gebrauch unbeschichtet ist oder die Röhrenspanplatten zum Zwecke des Schallschutzes geschlitzt sind.

Das Methyldiphenylisocyanat ist in den erfindungsgemäßen Formkörpern vorzugsweise gleichmäßig verteilt. Dadurch wird eine über den Querschnitt gleichmäßige Festigkeit erzielt. Außerdem erübrigen sich komplizierte Maßnahmen bei der Herstellung. Auch ist die Oberfläche der Formkörper mit Vorteil frei von Trennmitteln, so daß sich eine nachträgliche Entfernung erübrigt, wodurch die Herstellung weiter vereinfacht wird.

Die erfindungsgemäßen Formkörper können in der üblichen Weise weiterverarbeitet, beispielsweise furniert oder lackiert werden. Die daraus hergestellten Produkte haben neben der Freiheit von Formaldehyd zudem noch den Vorteil der höheren Quellfestigkeit und der höheren mechanischen Festigkeit.

Das als Bindemittel dienende Methyldiphenylisocyanat (MDI) wird beim erfindungsgemäßen Verfahren in Form einer wäßrigen Emulsion verwendet, da eine solche Mischung einfacher zu verarbeiten ist als Methyldiphenylisocyanat in wasserfreier Form und auch der physikalische Einmischvorgang erleichtert ist.

Beim Verfahren gemäß der Erfindung kann das Methyldiphenylisocyanat (MDI) zwar zusammen mit einem Trennmittel eingesetzt werden (beispielsweise in Form von ®Suprasec 1249 der Firma Deutsche ICI GmbH, Frankfurt). Jedoch ist dies nicht unbedingt notwendig, da hervorragende Ergebnisse auch mit Methyldiphenylisocyanat ohne eingebautes Trennmittel erzielbar sind.

Überraschend ist, daß beim erfindungsgemäßen Verfahren die Gefahr eines Dampfstaues in der Strangpresse und damit einer Unterbrechung des Strangpressvorgangs durch die Verwendung von Methyldiphenylisocyanat als Bindemittel verringert wird, so daß der Wassergehalt der zur verpressenden Mischung erheblich angehoben werden kann. Daher kann entweder eine stärker verdünnte MDI/Wasser-Emulsion verwendet werden oder es braucht der Feuchtigkeitsgehalt der Holzspäne vor dem Vorpressen nicht soweit abgesenkt werden. So können Holzspäne und/oder Holzfasern eingesetzt werden, deren Feuchtigkeitsgehalt vor dem Vermischen über 5 Gew.% liegt. Der Feuchtigkeitsgehalt der zu verpressenden Mischung aus Holzspänen und/oder Holzfasern sowie dem Bindemittelsystem kann sogar über 6 Gew.%, insbesondere zwischen 8 und 15 Gew.% liegen, ohne daß ein Druckstau zu befürchten ist.

Beim Verfahren gemäß der Erfindung enthalten die Formkörper kein flüchtiges Isocyanat mehr, da sich Methylphenylisocyanat bei den Preßtemperaturen von 100 bis 250 °C vollständig umsetzt.

Beim erfindungsgemäßen Verfahren kann der zu verpressenden Mischung als Hydrophobierungsmittel ein Festwachs in Form einer wasserhaltigen Emulsion zugesetzt werden, wobei Mengen von 0,5 bis 4 Gew.%, insbesondere von 1 bis 3 Gew.%, ausreichen.

Beim Verfahren gemäß der Erfindung kann bei der Herstellung der Isocyanat-Emulsion so gearbeitet werden, daß zunächst ein Gemisch von Wasser und Festwachsemulsion vorgelegt und anschließend wasseremulgierbares Methyldiphenylisocyanat eingerührt wird.

Beispiel 1

In einem Mischer wurden 100 kg Holzspäne mit einem Feuchtegehalt von 1,5% mit einem unmittelbar vorher hergestellten Bindemittelgemisch aus

4,0 kg ®Suprasec 1249 (aromatisches Polyisocyanat (MDI), wasseremulgierbar mit eingebautem Trennmittel der Firma Deutsche ICI GmbH, Frankfurt)

4,0 kg ®Mobilcer A (wässerige Wachsemulsion mit einem Feststoffgehalt von 50% der Firma Mobil Oil AG, Hamburg)
4,0 kg Wasser
bedüst.

Nach einer Nachmischzeit von 2 Minuten wurde das Gemisch einer Strangpresse zugeführt und bei einer Temperatur von 170 °C zu Röhrenspanplatten von 23 mm Dicke verarbeitet.

Die Ergebnisse der analytischen Untersuchungen und der mechanischen Prüfungen sind in der Tabelle 1 aufgeführt.

Beispiel 2

Es wurde analog Beispiel 1 gearbeitet mit der Abänderung, daß das Bindemittelgemisch aus
10,0 kg ®Suprasec 1249
7,0 kg Wasser
bestand.

Die Ergebnisse der analytischen Untersuchungen und der mechanischen Prüfungen sind in der Tabelle 1 aufgeführt.

Beispiel 3

Es wurde analog Beispiel 1 gearbeitet mit der Abänderung, daß das Bindemittelgemisch aus
4,0 kg ®Suprasec 1042 (aromatisches Polyisocyanat (MDI), wasseremulgierbar der Firma Deutsche ICI GmbH, Frankfurt
2,0 kg ®Mobilcer A
6,0 kg Wasser
bestand.

Die Ergebnisse der analytischen Untersuchungen und der mechanischen Prüfungen sind in der Tabelle 1 aufgeführt.

Beispiel 4

Es wurde analog Beispiel 1 gearbeitet mit der Abänderung, daß das Bindemittelgemisch aus
8,0 kg ®Suprasec 1042
2,0 kg ®Mobilcer A
6,0 kg Wasser
bestand.

Die Ergebnisse der analytischen Untersuchungen und der mechanischen Prüfungen sind in der Tabelle 1 aufgeführt.

Beispiel 5

Es wurde analog Beispiel 1 gearbeitet mit der Abänderung, daß das Bindemittelgemisch aus
8,0 kg ®Suprasec 1042
8,0 kg Wasser
bestand.

Die Ergebnisse der analytischen Untersuchungen und der mechanischen Prüfungen sind in der Tabelle 1 aufgeführt.

Beispiel 6

In einem Mischer wurden
100 kg Holzspäne (Feuchtegehalt: 1,5%)
19 kg ®Exolit 456 (Firma HOECHST Aktiengesellschaft, Frankfurt)
– Hierbei handelt es sich um ein Flammschutzmittel auf der Basis von Ammoniumpolyphosphat. Das Produkt wird durch

Mikroverkapselung von Ammoniumpolyphosphat mit Melamin/Formaldehyd-Harzen hergestellt (EP 0 033 361). Der Phosphorgehalt liegt bei 29%, der Stickstoffgehalt bei 16,5%) — vorgemischt und dann mit einem unmittelbar vorher hergestellten Bindemittelgemisch aus

9,5 kg ®Suprasec 1042
11,5 kg Wasser bedüst.

Nach einer Nachmischzeit von 2 Minuten wurde das Gemisch einer Strangpresse zugeführt und bei einer Temperatur von 170°C zu Röhrenspanplatten von 23 mm Dicke verarbeitet.

Die Ergebnisse der analytischen Untersuchungen und der mechanischen Prüfungen sind in der Tabelle 2 aufgeführt.

Die Ergebnisse der Brandprüfung sind in der Tabelle 3 aufgeführt.

Beispiel 7

Es wurde analog Beispiel 1 gearbeitet mit den Abänderungen, daß

1. das Bindemittelgemisch aus
   4,0 kg ®Suprasec 1042
   8,0 kg Wasser
   bestand,
2. das Holzspan/Bindemittel-Gemisch in der Strangpresse bei einer Temperatur von 170°C zu Vollplatten von 10 mm Dicke verarbeitet wurde.

Die Ergebnisse der analytischen Untersuchungen und der mechanischen Prüfungen sind in der Tabelle 4 aufgeführt.

Tabelle 1: Analytische Untersuchungen und mechanische Prüfungen

| Probematerial | Rohdichte (kg/m³) | Wassergehalt (% H₂O) | Quellung nach 1 Stunde (%) | Zugfestigkeit[1] (N/mm²) | Biegefestigkeit[2] (N/mm²) |
|---|---|---|---|---|---|
| Beispiel 1 | 690 | 3,2 | 1,9 | 0,62 | 6,8 |
| Beispiel 2 | 640 | 3,3 | 2,1 | 0,64 | 7,4 |
| Beispiel 3 | 710 | 4,4 | 2,2 | 1,04 | 9,5 |
| Beispiel 4 | 780 | 4,2 | 1,1 | 1,69 | 17,7 |
| Beispiel 5 | 740 | 4,3 | 1,7 | 1,26 | 15,5 |
| DIN 68764-Anforderungen | ohne Angabe | ohne Angabe | ohne Angabe | ≧0,40 | ≧4,0 |

[1] parallel zur Herstellrichtung
[2] rechtwinklig zur Herstellrichtung

Tabelle 2: Analytische Untersuchungen und mechanische Prüfungen

| Probematerial | Rohdichte (kg/m³) | Phosphor-gehalt (% P) | Wasserge-halt (% H₂O) | Quellung nach 1 Stunde (%) | Zugfestig-keit[1] (N/mm²) | Biegefestig-keit[2] (N/mm²) |
|---|---|---|---|---|---|---|
| Beispiel 6 | 870 | 4,0 | 4,0 | 1,3 | 12,7 | 18,3 |
| DIN 68764-Anforderungen | ohne Angabe | ohne Angabe | ohne Angabe | ohne Angabe | ≧0,40 | ≧4,0 |

[1] parallel zur Herstellrichtung
[2] rechtwinklig zur Herstellrichtung

Tabelle 3: Brandschachtprüfung nach DIN 4102

| Probematerial | max. Flammen-höhe (cm) | max. Rauchgas-temperatur (°C) | mittlere Rest-länge (cm) | Rauchgas-dichte[1] | DIN 4102-Klasse |
|---|---|---|---|---|---|
| Beispiel 6 | 80 | 132 | 17 | 6 | B1 |
| DIN 4102-Anforderungen | <100 | <200 | >15 | ohne Angabe | |

[1] gemessen als minimale Transmission (%)

Tabelle 4: Analytische Untersuchungen und mechanische Prüfungen

| Probematerial | Rohdichte (kg/m³) | Wassergehalt (% H₂O) | Quellung nach 1 Stunde (%) | Zugfestigkeit[1] (N/mm²) | Biegefestigkeit[2] (N/mm²) |
|---|---|---|---|---|---|
| Beispiel 7 | 730 | 5,1 | 4,9 | 1,20 | 22,8 |
| DIN 68764-Anforderungen | ohne Angabe | ohne Angabe | ohne Angabe | $\geqq 0,40$ | $\geqq 5,0$ |

[1] parallel zur Herstellrichtung
[2] rechtwinklig zur Herstellrichtung

## Patentansprüche

1. Formkörper, insbesondere Spanplatten in Form von Vollplatten oder Röhrenplatten, aus Holzspänen und/oder Holzfasern unter Zusatz eines Isocyanates als Bindemittel, dadurch gekennzeichnet, daß die Formkörper 8 bis 15 Gewichts% Methyldiphenylisocyanat (MDI) als Bindemittel und 5 bis 50 Gewichts% eines mit einem wasserunlöslichen Kunstharz umhüllten Ammoniumpolyphosphates als Flammschutzmittel – jeweils bezogen auf die trockenen Holzspäne und/oder Holzfasern – enthalten.

2. Verfahren zur Herstellung von Formkörpern, wobei Holzspäne, Holzfasern oder deren Mischungen nach Zusatz eines Bindemittels in eine Strangpresse eingebracht und darin zwischen auf 100 bis 250°C beheizten Platten bei Drucken von 0,5 bis 2,0 N/mm² zu Formkörpern, insbesondere zu Spanplatten in Form von Vollplatten oder Röhrenplatten, verarbeitet werden, dadurch gekennzeichnet, daß eine Vormischung aus den Holzspänen oder Holzfasern und einem Flammschutzmittel mit einer wäßrigen Emulsion eines Isocyanates als Bindemittel bedüst wird, wobei als Flammschutzmittel ein mit einem wasserunlöslichen Kunstharz umhülltes Ammoniumpolyphosphat in Mengen von 5 bis 50 Gewichts% und als Bindemittel Methyldiphenylisocyanat (MDI) in Mengen von 8 bis 15 Gewichts% – jeweils bezogen auf die trockenen Holzspäne und/oder Holzfasern – dienen, und daß die in die Strangpresse eingebrachte Mischung aus Holzspänen und/oder Holzfasern mit Flammschutzmittel und Bindemittel einen Feuchtigkeitsgehalt von mindestens 6 Gewichts% aufweist.

3. Verfahren nach Anspruch 2, dadurch gekennzeichnet, daß der wäßrigen Emulsion des Bindemittels ein Hydrophobierungsmittel zugesetzt ist.

4. Verfahren nach Anspruch 3, dadurch gekennzeichnet, daß das Hydrophobierungsmittel eine wäßrige Wachsemulsion ist.

## Claims

1. A molded article, in particular chipboard in the form of solid board or tubular board, composed of wood chips and/or wood fibers with the addition of an isocyanate as a binder, wherein the molded article contains 8 to 15% by weight of methylenedi-(phenyldiisocyanate) (MDI) as the binder and 5 to 50% by weight of an ammonium polyphosphate, enveloped by a water-insoluble synthetic resin, as a flame retardant, each relative to the dry wood chips and/or wood fibers.

2. A process for producing a molded article, in which wood chips, wood fibers or mixtures thereof are, after addition of a binder, fed to an extruder and processed therein, between plates heated to 100 to 250°C under pressures of 0.5 to 2.0 N/mm², to give molded articles, in particular chipboard in the form of solid board or tubular board, which comprises spraying a premix of the wood chips or wood fibers and a flame retardant with an aqueous emulsion of an isocyanate as the binder, an ammonium polyphosphate enveloped with a water-insoluble synthetic resin being used as the flame retardant in quantities of 5 to 50% by weight and methylenedi-(phenyldiisocyanate) (MDI) being used as the binder in quantities of 8 to 15% by weight, each relative to the dry wood chips and/or wood fibers, and the mixture of wood chips and/or woods fibers with flame retardant and binder, fed to the extruder, having a moisture content of at least 6% by weight.

3. The process as claimed in claim 2, wherein an agent confering hydrophobic properties is added to the aqueous emulsion of the binder.

4. The process as claimed in claim 3, wherein the agent conferring hydrophobic properties is an aqueous wax emulsion.

## Revendications

1. Corps moulés, en particulier panneaux de particules sous forme de plaques pleines ou de plaques de tubes, en copeaux de bois et/ou fibres de bois avec addition d'un isocyanate comme agent liant, caractérisés en ce que les corps moulés contiennent 8 à 15% en poids de diphénylméthanediisocyanate (MDI) comme agent liant et 5 à 50% en poids d'un polyphosphate d'ammonium enrobé dans une résine synthétique insoluble dans l'eau comme agent ignifugeant – chaque fois par rapport aux copeaux de bois et/ou fibres de bois secs.

2. Procédé pour la fabrication de corps moulés, des copeaux de bois, des fibres de bois ou leurs mélanges étant introduits dans une extrudeuse après addition d'un agent liant et transformés dans celle-ci en corps moulés, en particulier en panneaux de particules sous forme de plaques pleines ou de plaques de tubes, entre des plaques chauffées à 100 à 250°C sous des pressions de 0,5 à 2,0 N/mm², caractérisé en ce que l'on pulvérise une émulsion aqueuse d'un isocyanate comme agent liant sur un mélange préalable des copeaux de bois ou fibres de bois et d'un agent ignifugeant, en se servant d'un polyphosphate d'ammonium enrobé avec une résine synthétique insoluble dans l'eau comme agent ignifugeant en quantités de 5 à 50% en poids et de diphénylméthanediiso-cyanate (MDI) comme agent liant en quantités de 8 à 15% en poids – rapportées chaque fois aux copeaux de bois et/ou aux fibres de bois sec – et en ce que le mélange de copeaux de bois et/ou fibres de bois avec l'agent ignifugeant et l'agent liant introduit dans l'extrudeuse présente une teneur en humidité d'au moins 6% en poids.

3. Procédé selon la revendication 2, caractérisé en ce que l'on ajoute un agent imperméabilisant à l'émulsion aqueuse du liant.

4. Procédé selon la revendication 3, caractérisé en ce que l'agent imperméabilisant est une émulsion aqueuse de cire.